# EUROPÄISCHE PATENTANMELDUNG

(11) **EP 1 987 947 A1**
(43) Veröffentlichungstag der Anmeldung: **05.11.2008**
(21) Anmeldenummer: 07009052.7
(22) Anmeldetag: 04.05.2007
(51) Int. Cl.: B30B 11/22, A23K 1/00, A23N 17/00

(54) **Verfahren zum Herstellen von Pellets aus faserigen Produkten**

(71) Anmelder: Amandus Kahl GmbH & Co. KG, 21465 Reinbek (DE)
(72) Erfinder: Behrmann, Joachim, 21465 Wentorf (DE); Buschart, Axel, Dipl.-Ing., 32676 Lüdge-Elbrinxen (DE); Sitzmann, Werner, Dr.-Ing., 21075 Hamburg (DE)
(74) Vertreter: Niebuhr, Heinrich

(57) **Zusammenfassung**

Das Verfahren zum Herstellen von Pellets aus faserigen Produkten wie Holz oder Stroh, bei denen das Rohmaterial vorgetrocknet, zerkleinert und anschließend in einer Pelletpresse zu Pellets verarbeitet wird, zeichnet sich dadurch aus, dass das Rohmaterial in einer Flachmatrizenpresse zerkleinert wird.

## Beschreibung

Die Erfindung betrifft ein Verfahren zum Herstellen von Pellets aus faserigen Produkten wie Holz oder Stroh, bei dem das Rohmaterial vorgetrocknet, zerkleinert und anschließend in einer Pelletpresse zu Pellets verarbeitet wird.

Die Verwendung von Pellets aus faserigen Materialien, insbesondere Holz oder Stroh, gewinnt immer größere Bedeutung. Die Pellets können dabei für Isolierzwecke, als Zuschlagstoffe für Verbundmaterialien, zum Heizen und für viele andere Zwecke verwendet werden. In Form dieser Pellets steht nicht nur ein kostengünstiges Material zur Verfügung. Es können vielmehr auch Rohmaterialien sinnvoll weiterverarbeitet werden, die sonst nur Abfall wären, der entsorgt werden muss, wie z.B. Stroh, Hobelspäne, andere Holzspäne und dergleichen.

Pellets werden in sogenannten Pelletpressen hergestellt, in denen das zu verpressende Material durch Kollerrollen, die auf einer mit Bohrungen versehenen Matrize abrollen, durch die Bohrungen gedrückt wird. Wegen der Reibung an der Wand der Bohrungen wird dabei das Material zu Pellets bzw. Materialsträngen geformt, die beim Austreten aus der Matrix in einzelne Stücke geschnitten werden. Man unterscheidet dabei Flachmatrizenpresse, bei denen die Matrizen flach sind (DE 33 44 044 Al), und Ringmatrizenpressen, bei denen die Matrizen ringförmig sind und die Kollerrollen im Inneren derselben abrollen.

Faseriges Rohmaterial muss dabei zunächst zerkleinert werden, bevor es der Pelletpresse zugeführt werden kann. Dies geschieht üblicherweise in Hammermühlen oder ähnlich aufgebauten Schlagmühlen. Dabei treten zwei Probleme auf.
1. Damit das Rohmaterial in der Hammermühle wirksam zerkleinert werden kann, muss es verhältnismäßig spröde, d.h. trocken sein. Es ist daher normalerweise erforderlich, vor der zerkleinerung in der Hammermühle das Material zu trocknen, was einen unter Umständen beträchtlichen Energieaufwand für den Trockner erfordert. Anschließend ist dann häufig wieder eine Befeuchtung erforderlich, da die optimale Feuchtigkeit bei der Pelletierung zum Beispiel von Rohmaterialien auf Holzbasis erfahrungsgemäß zwischen 10 und 15 Gewichtsprozent liegen sollte.
2. Bei der Zerkleinerung in Hammermühlen entstehen nicht nur Teilchen mit einer Korngröße, die sich gut für die Pelletierung eignen, sondern auch sehr viel feinere Teilchen. Diese Staubteilchen aus organischem Material bewirken eine sehr hohe Explosionsgefahr. Es sind daher bei Hammermühlen aufwändige Explosionsschutzmaßnahmen zu treffen, die nicht nur hohe Investitionskosten, sondern auch beträchtliche Betriebskosten erfordern.

Die Aufgabe der Erfindung besteht in der Schaffung eines Verfahrens der eingangs genannten Art, mit der die Pellets mit geringerem Energieaufwand und maschinellem Aufwand hergestellt werden können.

Die erfindungsgemäße Lösung besteht darin, dass das Rohmaterial in einer Flachmatrizenpresse zerkleinert wird. Eine eigentliche Pelletierung muss dabei nicht stattfinden. Es ist aber möglich, das Verfahren so durchzuführen, dass das Rohmaterial in der Flachmatrizenpresse, in der die Zerkleinerung erfolgt, wenigstens teilweise zu Pellets verarbeitet wird.

Die Zerkleinerungswirkung beruht dabei auf einem wesentlichen Unterschied zwischen Flachmatrizenpressen und Ringmatrizenpressen. Bei einer Ringmatrizenpresse (DE 33 24 159 Cl) rollen die Kollerrollen normal auf der ringförmigen Matrize ab. Die Relativgeschwindigkeit aller Teile der Oberfläche der Kollenrollen, die die Matrizen berühren, relativ zu den berührten Matrizenbereichen ist null oder hat bei leichtem Gleiten überall denselben Wert. Bei einer Flachmatrizenpresse (DE 33 44 044 A1) hat man den Wert null für die Relativgeschwindigkeit nur in der Mitte der Kollerrollen, während innen und außen die Rotationsgeschwindigkeiten der Oberflächenteile der Kollerrollen größer beziehungsweise kleiner sind als die Geschwindigkeiten der entsprechenden Oberflächenbereiche der Matrize. Diese Geschwindigkeitsdifferenzen und die damit auftretenden Reibungswirkungen können nun erstaunlicherweise zur Zerkleinerung des faserigen Materials ausgenutzt werden.

Während Matrizenpressen normalerweise zum Herstellen von Pellets verwendet werden, geht die Erfindung von der Erkenntnis aus, dass in Flachmatrizenpressen im Gegensatz zu Ringmatrizenpressen aufgrund ihres Prinzips eine scherende und damit zerkleinernde Wirkung auf Materialien, insbesondere faserige Produkte, ausgeübt wird. Statt in einer Hammermühle findet beim Verfahren der Erfindung die Zerkleinerung also in einer Flachmatrizenpresse statt. Im Gegensatz zum Fall der Hammermühle ist dabei eine Vortrocknung in dem Maße, wie es bei der konventionellen Einzelpelletierung erforderlich ist, nicht vonnöten, so dass sich bei der Trocknung deutliche Einsparungen an Energie und apparativem Aufwand ergeben. Das Rohmaterial kann durchaus eine absolute Feuchte von 15 bis 18 Gewichtsprozent haben. Aufgrund der anderen Funktionsweise einer Matrizenpresse und wegen des höheren Feuchtigkeitgehalts treten dabei die erwähnten Staubprobleme wie bei einer Hammermühlen nicht auf. Außerdem stellt die Flachmatrizenpresse im Gegensatz zur Hammermühle aufgrund ihrer geringeren Drehzahl und in der ihr herrschenden feuchten Atmosphäre erwiesenermaßen keine Zündquelle dar.

Da das Rohmaterial bei der Behandlung in der Flachmatrizenpresse erwärmt wird, verdunstet anschließend Wasser in Form von Brüden, wodurch sich der Feuchtigkeitsgehalt verringert, der dabei durchaus auf 10 bis 15 Gewichtsprozent eingestellt werden kann, der für die anschließende Pelletierung besonders vorteilhaft ist.

Die Flachmatrizenpresse wird dabei in erster Linie zur Zerkleinerung verwendet. Vorteilhafterweise wird die Behandlung dabei so durchgeführt, dass keine Pellets erzeugt werden oder das Material nur geringfügig anpelletiert wird. Wesentlich ist die Zerkleinerung. Untersucht man das zerkleinerte Material, stellt man überraschenderweise fest, dass sich mit der Flachmatrizenpresse ein erheblicher Zerkleinerungseffekt erzielen lässt, wodurch das so vorbehandelte Rohmaterial eine drastische Aktivierung der inneren Haftkräfte beim anschließenden Formen (dem eigentlichen Pelletieren) in der nachgeschalteten Pelletpresse erfährt.

In dieser zweiten Pelletpresse findet dann das Pelletieren statt. Es ist zwar bekannt, zwei Pelletpressen hintereinander anzuordnen, wobei die erste Pelletpresse auch eine Flachmatrizenpresse sein kann (DE 33 44 044 A1). Bei diesem Stand der Technik geht es aber um das Verpressen von pulverförmigen oder ähnlichen Stoffen, die in Pelletform überführt werden sollen. Eine Zerkleinerung ist dabei selbstverständlich nicht erforderlich, sondern im Gegensatz dazu eine Kompaktierung schon in der ersten Pelletpresse, so dass dieser Stand der Technik keinerlei Hinweise in Richtung auf die Erfindung geben kann.

Die zweite Pelletpresse, in der die Pelletierung stattfindet, kann ebenfalls eine Flachmatrizenpresse, wodurch besonders gute Ergebnisse erhalten werden, aber auch eine Ringmatrizenpresse sein, da es bei dieser zweiten Presse ja nicht mehr auf die Zerkleinerung, sondern nur auf die Pelletierung ankommt.

Bei Versuchen wurde Folgendes herausgefunden. Führt man das in der Flachmatrizenpresse zerkleinerte, auf etwa 60 bis 70° C aufgeheizte Material einer direkt nachgeschalteten Pelletpresse zu, so stellt man überraschenderweise fest, dass trotz eines um etwa 14 bis 18% geringeren spezifischen Energieeintrags (aufgrund der durch das erfindungsgemäße Zerkleinern jetzt verbesserten Pelletierbarkeit des Produkts) bei sogar geringfügig verbesserter Produktqualität, als dies bei einer vergleichsweise durchgeführten Einfachpelletierung der Fall ist, eine erhebliche Steigerung der Produktionsleistung der nachgeschalteten Pelletpresse um ca. 40% im Vergleich zu einer konventionellen Einfachpelletierung zu erzielen ist. Die Pellets haben auch eine verbesserte Qualität hinsichtlich Härte und Abrieb.

## Patentansprüche

1. Verfahren zum Herstellen von Pellets aus faserigen Produkten wie Holz oder Stroh, bei denen das Rohmaterial vorgetrocknet, zerkleinert und anschließend in einer Pelletpresse zu Pellets verarbeitet wird, **dadurch gekennzeichnet, dass** das Rohmaterial in einer Flachmatrizenpresse zerkleinert wird.

2. Verfahren nach Anspruch 1, **dadurch gekennzeichnet, dass** Rohmaterial mit einer absoluten Feuchte von 15 bis 25 Gewichtsprozent der Flachmatrizenpresse zur Zerkleinerung zugeführt wird.

3. Verfahren nach Anspruch 1 oder 2, **dadurch gekennzeichnet, dass** Rohmaterial mit einer absoluten Feuchte von 15 bis 20 Gewichtsprozent der Flachmatrizenpresse zur Zerkleinerung zugeführt wird.

4. Verfahren nach einem der Ansprüche 1 bis 3, **dadurch gekennzeichnet, dass** Rohmaterial mit einer absoluten Feuchte von 15 bis 18 Gewichtsprozent der Flachmatrizenpresse zur Zerkleinerung zugeführt wird.

5. Verfahren nach einem der Ansprüche 1 bis 4, **dadurch gekennzeichnet, dass** das Material nach Verlassen der Flachmatrizenpresse einem Verdunstungsvorgang ausgesetzt wird, bei denm die absolute Feuchte auf Werte von 10 bis 15 Gewichtsprozent absinkt.

6. Verfahren einem der Ansprüche 1 bis 5, **dadurch gekennzeichnet, dass** die Flachmatrizenpresse so betrieben wird, was das Rohmaterial darin auf 60 bis 70° C erwärmt wird.

7. Verfahren nach einem der Ansprüche 1 bis 6, **dadurch gekennzeichnet, dass** die Pelletierung nach der Behandlung in der Flachmatrizenpresse ebenfalls mit einer Flachmatrizenpresse erfolgt.

8. Verfahren nach einem der Ansprüche 1 bis 6, **dadurch gekennzeichnet, dass** die Pelletierung nach der Behandlung in der Flachmatrizenpresse in einer Ringmatrizenpresse erfolgt.

9. Verfahren nach einem der Ansprüche 1 bis 8, **dadurch gekennzeichnet, dass** das Rohmaterial in der Flachmatrizenpresse, in der die Zerkleinerung erfolgt, wenigstens teilweise zu Pellets verarbeitet wird.
